# EUROPÄISCHE PATENTSCHRIFT

(11) **EP 2 052 517 B1**
(45) Veröffentlichungstag und Bekanntmachung des Hinweises auf die Patenterteilung: **02.11.2016**
(21) Anmeldenummer: 07788345.2
(22) Anmeldetag: 09.08.2007
(51) Int. Cl.: H04L 29/06, H04L 12/22, H04W 12/04, H04W 12/06, H04W 80/04, H04W 88/06

(54) **VERFAHREN UND SYSTEM ZUM BEREITSTELLEN EINES ZUGANGSSPEZIFISCHEN SCHLÜSSELS**
METHOD AND SYSTEM FOR PROVIDING AN ACCESS SPECIFIC KEY
PROCÉDÉ ET SYSTÈME POUR LA MISE À DISPOSITION D'UNE CLÉ D'ACCÈS SPÉCIFIQUE

(30) Priorität: 14.08.2006 DE 102006038037
(43) Veröffentlichungstag der Anmeldung: 29.04.2009
(73) Patentinhaber: Siemens Aktiengesellschaft, 80333 München (DE)
(72) Erfinder: FALK, Rainer, 85435 Erding (DE); HORN, Günther, 80331 München (DE); KRÖSELBERG, Dirk, 80469 München (DE)
(86) Internationale Anmeldenummer: PCT/EP2007/058284
(87) Internationale Veröffentlichungsnummer: WO 2008/019989

(56) Entgegenhaltungen:
- WO-A-2004/049672
- US-A1- 2002 120 844
- US-A1- 2006 161 771

## Beschreibung

Die Erfindung betrifft ein Verfahren und ein System zum Bereitstellen eines zugangsspezifischen Schlüssels für die Absicherung einer Datenübertragung zwischen einem mobilen Endgerät und einem Knoten eines Zugangsnetzes.

Das Internet mit dem TCP/IP-Protokoll bietet eine Plattform für die Entwicklung höherer Protokolle für den mobilen Bereich. Da die Internet-Protokolle weit verbreitet sind, kann mit entsprechenden Protokollerweiterungen für mobile Umgebungen ein großer Anwenderkreis erschlossen werden. Die herkömmlichen Internet-Protokolle sind jedoch ursprünglich nicht für den mobilen Einsatz konzipiert. In der Paketvermittlung des herkömmlichen Internets werden die Pakete zwischen stationären Rechnern ausgetauscht, die weder ihre Netzwerkadresse ändern noch zwischen verschiedenen Subnetzen wandern. Bei Funknetzen mit mobilen Endgeräten bzw. Rechnern, werden mobile Rechner MS (Mobile Station) häufig in verschiedene Netzwerke eingebunden. Das DHCP (Dynamic Host Configuration Protocol) ermöglicht mit Hilfe eines entsprechenden Servers die dynamische Zuweisung einer IP-Adresse und weiterer Konfigurationsparameter an einen Rechner in einem Netzwerk. Ein Rechner, der in ein Netzwerk eingebunden wird, bekommt automatisch eine freie IP-Adresse durch das DHCP-Protokoll zugewiesen. Hat ein mobiler Rechner DHCP installiert, muss er lediglich in Reichweite eines lokalen Netzwerkes kommen, das die Konfiguration über das DHCP-Protokoll unterstützt. Bei dem DHCP-Protokoll ist eine dynamische Adressvergabe möglich, d.h. eine freie IP-Adresse wird automatisch für eine bestimmte Zeit zugeteilt. Nach Ablauf dieser Zeit muss die Anfrage durch den mobilen Rechner MS entweder erneut gestellt werden oder die IP-Adresse kann anderweitig vergeben werden.

Mit DHCP kann ein mobiler Rechner MS ohne manuelle Konfiguration in ein Netzwerk eingebunden werden. Als Voraussetzung muss lediglich ein DHCP-Server zur Verfügung stehen. Ein mobiler Rechner MS kann so Dienste des lokalen Netzwerkes benutzen und beispielsweise zentral abgelegte Dateien benutzen. Bietet ein mobiler Rechner MS jedoch selbst Dienste an, kann ein potentieller Dienstnutzer den mobilen Rechner MS nicht auffinden, da sich dessen IP-Adresse in jedem Netzwerk, in das der mobile Rechner eingebunden wird, ändert. Das gleiche geschieht, wenn sich eine IP-Adresse während einer bestehenden TCP-Verbindung ändert. Dies führt zum Abbruch der Verbindung. Daher bekommt bei Mobile-IP ein mobiler Rechner MS eine IP-Adresse zugewiesen, die er auch in einem anderen Netzwerk behält. Bei herkömmlichem IP-Netzwechsel ist es nötig, die IP Adressen-Einstellungen entsprechend anzupassen. Eine ständige Anpassung von IP- und den herkömmlichen automatischen Konfigurationsmechanismen wird die bestehende Verbindung bei einem Wechsel der IP-Adresse unterbrochen. Das MIP-Protokoll (RFC2002, RFC2977, RFC3344, RFC3846, RFC3957, RFC3775, RFC3776, RFC4285) unterstützt die Mobilität von mobilen Endgeräten MS. Bei den herkömmlichen IP-Protokollen muss das mobile Endgerät MS jedes Mal seine IP-Adresse anpassen, wenn es das IP-Subnetz wechselt, damit die an das mobile Endgerät MS adressierten Datenpakete richtig geroutet werden. Um eine bestehende TCP-Verbindung aufrecht zu erhalten, muss das mobile Endgerät MS sein IP-Adresse beibehalten, da ein Adressenwechsel zu einer Unterbrechung der Verbindung führt. Das MIP-Protokoll ermöglicht eine transparente Verbindung zwischen den beiden Adressen, nämlich einer permanenten Home-Adresse und einer zweiten temporären Care-Off-Adresse. Die Care-Off-Adresse ist diejenige IP-Adresse unter der das mobile Endgerät MS aktuell erreichbar ist.

Ein Heimagent (Home Agent) HA ist ein Stellvertreter des mobilen Endgerätes MS, solange sich das mobile Endgerät MS nicht in dem ursprünglichen Heimnetz aufhält. Der Heimagent ist ständig über den aktuellen Aufenthaltsort des mobilen Rechners MS informiert. Der Heimagent HA stellt üblicherweise eine Komponente eines Routers im Heimnetz des mobilen Endgerätes dar. Wenn das mobile Endgerät MS sich außerhalb des Heimnetzes befindet, stellt der Heimagent HA eine Funktion bereit, damit sich das mobile Endgerät MS anmelden kann. Dann leitet der Heimagent HA die an das mobile Endgerät MS adressierten Datenpakete in das aktuelle Subnetz des mobilen Endgerätes MS weiter.

Ein Fremdagent (Foreign Agent) FA befindet sich in dem Subnetz, in dem sich das mobile Endgerät MS bewegt. Der Fremdagent FA leitet eingehende Datenpakete an das mobile Endgerät MS bzw. an den mobilen Rechner MS weiter. Der Fremdagent FA befindet sich in einem so genannten Fremdnetz (Visited Network). Der Fremdagent FA stellt ebenfalls üblicherweise eine Komponente eines Routers dar. Der Fremdagent FA routet alle administrativen Mobile-Datenpakete zwischen dem mobilen Endgerät MS und dessen Heimagenten HA. Der Fremdagent FA entpackt die von dem Heimagent HA gesendeten, getunnelten IP-Datenpakete und leitet deren Daten an das mobile Endgerät MS weiter.

Die Heimadresse des mobilen Endgerätes MS ist eine Adresse, unter der das mobile Endgerät MS permanent erreichbar ist. Die Heimadresse hat dasselbe Adressenpräfix wie der Heimagent HA. Die Care-Of-Adresse ist diejenige IP-Adresse, die das mobile Endgerät MS in dem fremden Netz verwendet.

Der Heimagent HA pflegt eine so genannten Mobilitätsanbindungstabelle (MBT: Mobility Binding Table). Die Einträge in dieser Tabelle dienen dazu, die beiden Adressen, d.h. die Heimadresse und die Care-Of-Adresse, eines mobilen Endgeräts MS einander zuzuordnen und die Datenpakete entsprechend umzuleiten.

Die MBT-Tabelle enthält Einträge über die Heimadresse, die Care-Of-Adresse und eine Angabe über die Zeitspanne, in der diese Zuordnung gültig ist (Life Time).

Figur 1 zeigt ein Beispiel für eine Mobilitätsanbindungstabelle MBT nach dem Stand der Technik.

Der Fremdagent FA enthält eine Besucherliste bzw. Visitor List (VL: Visitor List), die Informationen über die mobilen Endgeräte MS enthält, die sich gerade in dem IP-Netz des Fremdagenten FA befinden.

Figur 2 zeigt ein Beispiel für eine derartige Besucherliste nach dem Stand der Technik.

Damit ein mobiler Rechner MS in ein Netz eingebunden werden kann, muss er zunächst in Erfahrung bringen, ob er sich in seinem Heim- oder Fremdnetz befindet. Zusätzlich muss das mobile Endgerät MS in Erfahrung bringen, welcher Rechner in dem Subnetz des Heim- bzw. der Fremdagent ist. Diese Informationen werden durch so genanntes Agent Discovery ermittelt.

Durch die nachfolgende Registrierung kann das mobile Endgerät MS seinen aktuellen Standort seinem Heimagenten HA mitteilen. Hierzu sendet der mobile Rechner bzw. das mobile Endgerät MS dem Heimagenten die aktuelle Care-Of-Adresse zu. Zur Registrierung sendet der mobile Rechner MS einen Registration-Request bzw. eine Registrierungsanforderung an den Heimagenten. Der Heimagent HA trägt die Care-Of-Adresse in seine Liste ein und antwortet mit einem Registration Reply bzw. einer Registrierungsantwort. Hierbei besteht allerdings ein Sicherheitsproblem. Da prinzipiell jeder Rechner an einem Heimagenten HA eine Registrierungsanforderung schicken kann, könnte man auf einfache Weise einem Heimagenten HA vorspiegeln, ein Rechner habe sich in ein anderes Netzwerk bewegt. So könnte ein fremder Rechner alle Datenpakete eines mobilen Rechners bzw. mobilen Endgerätes MS übernehmen, ohne dass ein Sender davon erfährt. Um dies zu verhindern, verfügen der mobile Rechner MS und der Heimagent HA über gemeinsame geheime Schlüssel. Kehrt ein mobiler Rechner MS in sein Heimatnetzwerk zurück, deregistriert er sich beim Heimagenten HA, da der mobile Rechner MS nunmehr alle Datenpakete selbst entgegennehmen kann. Ein mobiles Funknetz muss unter anderem folgende Sicherheitseigenschaften aufweisen. Informationen dürfen nur für gewünschte Kommunikationspartner zugänglich gemacht werden, d.h. nicht gewünschte Mithörer dürfen keinen Zugriff auf übertragene Daten erhalten. Das mobile Funknetz muss also die Eigenschaft der Vertraulichkeit (Confidentiality) aufweisen. Daneben muss Authentizität gegeben sein. Die Authentizität (Authenticity) erlaubt es einem Kommunikationspartner zweifelsfrei festzustellen, ob eine Kommunikation tatsächlich zu einem gewünschten Kommunikationspartner aufgebaut wurde oder ob sich eine fremde Partei als Kommunikationspartner ausgibt. Authentifizierungen können pro Nachricht oder pro Verbindung durchgeführt werden. Wird auf Basis von Verbindungen authentifiziert, wird nur einmal zu Anfang einer Sitzung (Session) der Kommunikationspartner identifiziert. Man geht dann für den weiteren Verlauf der Sitzung davon aus, dass die folgenden Nachrichten weiterhin von dem entsprechenden Sender stammen. Selbst wenn die Identität eines Kommunikationspartners feststeht, d.h. der Kommunikationspartner authentifiziert ist, kann der Fall auftreten, dass dieser Kommunikationspartner nicht auf alle Ressourcen zugreifen darf bzw. nicht alle Dienste über das Netzwerk benutzen darf. Eine entsprechende Autorisation setzt in diesem Fall eine vorhergehende Authentifizierung des Kommunikationspartners voraus.

Bei mobilen Datennetzen müssen Nachrichten längere Strecken über Luftschnittstellen zurücklegen und sind somit für potentielle Angreifer leicht erreichbar. Bei mobilen und drahtlosen Datennetzen spielen daher Sicherheitsaspekte eine besondere Rolle. Ein wesentliches Mittel zur Erhöhung der Sicherheit in Datennetzwerken stellen Verschlüsslungstechniken dar. Durch die Verschlüsselung ist es möglich, Daten über unsichere Kommunikationswege, beispielsweise über Luftschnittstellen, zu übertragen, ohne dass unbefugte Dritte Zugriff auf die Daten erlangen. Zum Verschlüsseln werden die Daten, d.h. der so genannte Klartext mit Hilfe eines Verschlüsselungsalgorithmus in Chiffre-Text transformiert. Der verschlüsselte Text kann über den unsicheren Datenübertragungskanal transportiert und anschließend entschlüsselt bzw. dechiffriert werden.

Als eine viel versprechende drahtlose Zugangstechnologie wird WiMax (Worldwide Interoperability for Microwave Access) als neuer Standard vorgeschlagen, der für die Funkübertragung IE-EE 802.16 verwendet. Mit WiMax sollen mit Sendestationen ein Beriech von bis zu 50 km mit Datenraten von über 100 Mbit pro Sekunde versorgt werden.

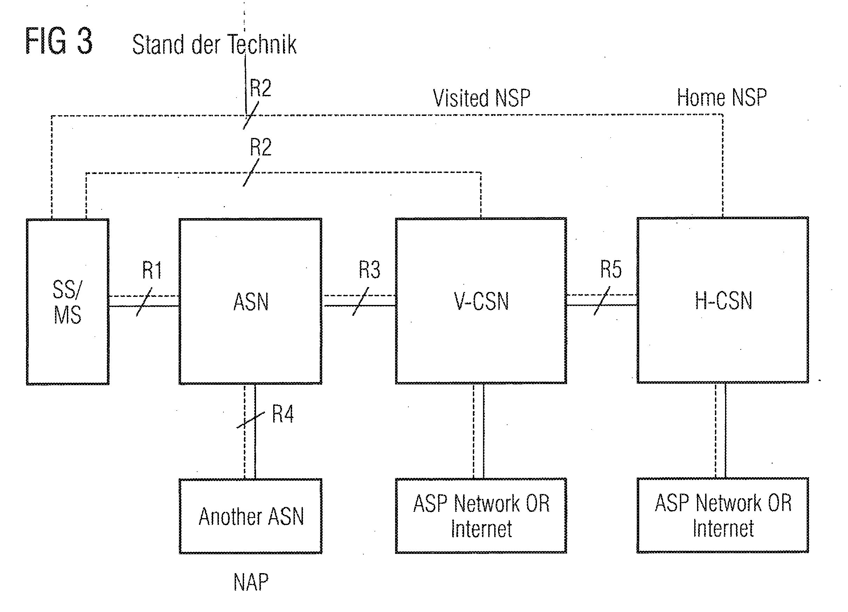

Figur 3 zeigt ein Referenzmodel für ein WiMax-Funknetzwerk. Ein mobiles Endgerät MS befindet sich im Bereich eines Zugangsnetzwerkes (ASN: Access Serving Network). Das Zugangsnetz ASN ist über mindestens ein besuchtes Netz (Visited Connectivity Service Network VCSN) bzw. Zwischennetz mit einem Heimnetz HCSN (Home Connectivity Service Network) verbunden. Die verschiedenen Netzwerke sind über Schnittstellen bzw. Referenzpunkte R miteinander verbunden. Der Heimagent HA der Mobilstation MS befindet sich in dem Heimnetz (HCSN) oder in einem der besuchten Netze (VCSN).

WiMax unterstützt zwei Realisierungsvarianten von Mobile IP, nämlich ein so genanntes Client MIP (CMIP), bei dem die Mobilstation MS selbst die MIP-Clientfunktion realisiert, und Proxy-MIP (PMIP), bei dem die MIP-Client-Funktion durch das WiMax-Zugangsnetz ASN realisiert ist. Die dazu im ASN vorgesehen Funktionalität wird als Proxy Mobile Node (PMN) oder als PMIP-Client bezeichnet. Dadurch kann MIP auch mit Mobilstationen MS verwendet werden, die selbst kein MIP unterstützen.

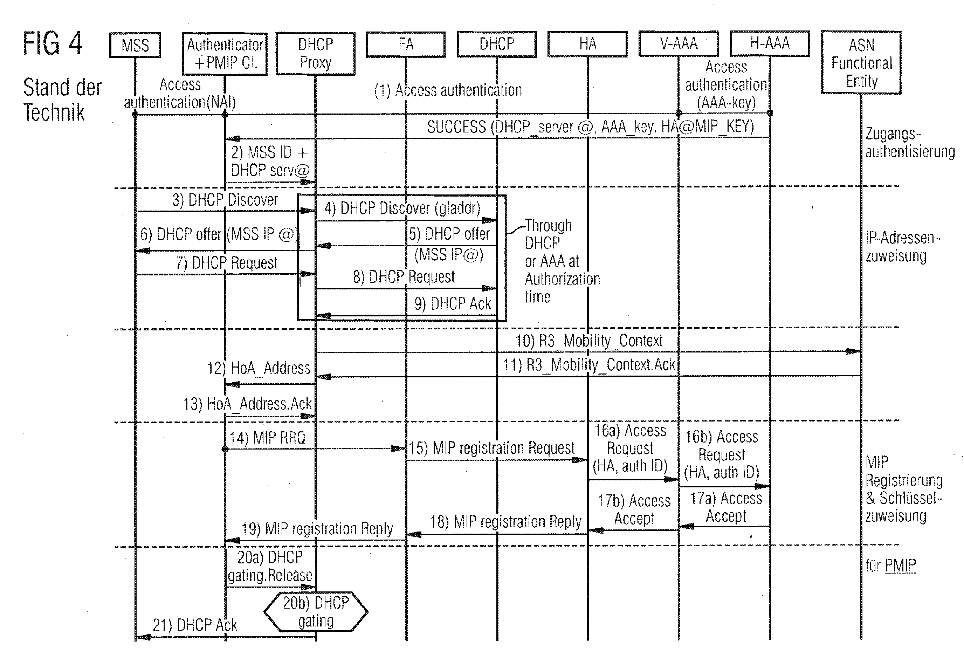

Figur 4 zeigt den Verbindungsaufbau bei Proxy-MIP (PMIP), wenn sich der Heimagent HA in dem besuchten Netzwerk VCSN befindet, nach dem Stand der Technik.

Nach Aufbau einer Funkverbindung zwischen dem mobilen Endgerät MS und einer Basisstation BS erfolgt zunächst eine Zugangsauthentisierung. Die Funktion der Authentisierung, der Autorisation und der Buchhaltung erfolgt mittels so genannter AAA-Servern (AAA: Authentification Authorization and Accounting). Zwischen dem mobilen Endgerät MS und dem AAA-Server des Heimnetzes (HAAA) werden Authentisierungsnachrichten ausgetauscht mittels der die Adresse des Heimagenten HA und ein Authentisierungsschlüssel gewonnen werden. Der Authentisierungsserver im Heimnetz enthält die Profildaten des Teilnehmers. Der AAA-Server erhält eine Authentisierungsanfragenachricht, die eine Teilnehmeridentität des mobilen Endgerätes enthält. Der AAA-Server generiert nach erfolgreicher Zugangsauthentisierung einen MSK-Schlüssel (MSK: Master Session Key) zum Schutz der Datenübertragungsstrecke zwischen dem mobilen Endgerät MS und der Basisstation BS des Zugangsnetzwerkes ASN. Dieser MSK-Schlüssel wird von dem AAA-Server des Heimnetzes über das Zwischennetz CSN an das Zugangsnetzwerk ASN übertragen.

Nach der Zugangsauthentisierung wird, wie in Figur 4 zu sehen, der DHCP-Proxy-Server im Zugangsnetzwerk ASN konfiguriert. Fall die IP-Adresse und Host-Konfiguration bereits in der AAA-Antwortnachricht enthalten ist, wird die gesamte Information in den DHCP-Proxy-Server heruntergeladen.

Nach erfolgreicher Authentisierung und Autorisierung sendet die Mobilstation bzw. das mobile Endgerät MS eine DHCP Discovery Nachricht und es erfolgt eine IP-Adressenzuweisung.

Wird ein mobiles Endgerät MS in ein Netz eingebunden, muss das mobile Endgerät MS möglicherweise in Erfahrung bringen können, ob es sich in einem Heim- oder einem Fremdnetz befindet. Weiterhin muss das mobile Endgerät MS in Erfahrung bringen, welcher Rechner in dem jeweiligen Netz der Heim. Bzw. der Fremdagent ist. Diese Informationen werden durch das so genannten Agent Discovery ermittelt. Es gibt zwei Arten von Agent Discovery, nämlich so genannte Agent Advertisement und das Agent Solicitation.

Bei dem Agent Advertisement senden die Agenten, d.h. die Heim- oder Fremdagenten, periodisch Broadcast-Nachrichten an alle Rechner bzw. mobilen Endgeräte des Subnetzes. Jeder Rechner, der in einem bestimmten Zeitraum die Broadcast-Nachrichten abhört, kann so die Agenten im jeweiligen Subnetz identifizieren.

Wird ein mobiles Endgerät MS neu aktiviert, ist es im Allgemeinen nicht praktisch, auf das nächste Agent -Advertisement zu warten. Das mobile Endgerät MS muss sofort wissen, in welchem Subnetz es sich gerade befindet. Beim so genannten Agent Solicitation sendet daher das mobile Endgerät MS eine Aufforderung an alle Rechner des jeweiligen Subnetzes, ein Agent Advertisement durchzuführen. Das mobile Endgerät MS kann durch Agent Solicitation erzwingen, dass sich die Agenten sofort zu erkennen geben, sodass sich die Wartezeit erheblich verkürzt. Agent Solicitation wird auch dann durchgeführt, wenn ein Agent Advertisement ausbleibt, beispielsweise bei Packet Loss oder Netzwechsel. Mit Hilfe des Agent Discovery kann ein mobiles Endgerät MS auch feststellten, ob es sich in seinem Heimnetz oder in einem Fremdnetz befindet. Anhand der Paketinformation innerhalb einer Agent Advertisement-Nachricht erkennt das mobile Endgerät MS seinen Heimagenten HA. Bekommt das mobile Endgerät MS Nachrichtenpakete von einem Fremdnetz, so kann es zusätzlich feststellen, ob sich sein Standort seit dem letzten Advertisement verändert hat. Empfängt das mobile Endgerät MS keine Advertisment-Nachricht, geht das mobile Endgerät MS zunächst davon aus, dass es sich in dem Heimnetz befindet und der Heimagent HA gestört ist. Das mobile Endgerät MS versucht dann mit dem Router des Netzwerkes Kontakt aufzunehmen, um diese Annahme zu bestätigen. Befindet sich das mobile Endgerät MS nicht in seinem Heimnetz, versucht es daraufhin, einen DHCP-Servcer zu erreichen und eine Adresse des Subnetzes zu erhalten. Ist dies erfolgreich, benutzt das mobile Endgerät MS diese Adresse als so genannte Colocated Care-Of-Adresse und nimmt mit dem Heimagenten HA Kontakt auf. Die Colocated Care-Of-Adresse ist einem dem mobilen Endgerät MS im Fremdnetz zugewiesene Adresse, die auch an den Heimagenten HA übermittelt wird.

Man unterscheidet zwischen netzbasiertem Mobilitätsmanagement (PMIP) und endgerätebasiertem Mobilitätsmanagement (CMIP). Beim endgerätebasierten Mobilitätsmanagement CMIP unterstützt das Endgerät Mobile-IP (MIP).

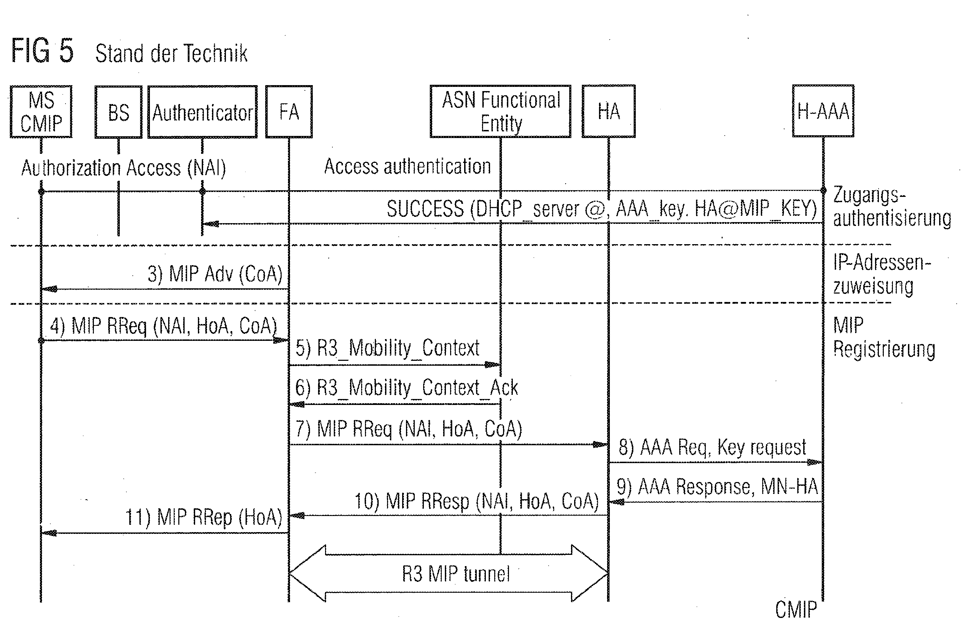

Figur 4 zeigt den Verbindungsaufbau bei einem herkömmlichen netzbasierten Mobilitätsmanagement (PMIP), während die Figur 5 den Verbindungsaufbau bei einem herkömmlichen endgerätebasierten Mobilitätsmanagement (CMIP) darstellt.

Beim Aufbau einer Verbindung zwischen dem mobilen Endgerät MS und dem Netz sendet der Authentisierungsserver des Heimnetzes (H-AAA) nach erfolgreicher Authentisierung des Teilnehmers eine Authentisierungsbetätigungsnachricht (SUCCESS). Die Authentisierungsbestätigungsnachricht meldet dem Authentisierungs-Client, dass die Authentisierung des Teilnehmers erfolgreich abgeschlossen wurde.

Beim Proxy-MIP bzw. netzbasierten Mobilitätsmanagement (PMIP) unterstützt das mobile Endgerät Mobile-IP nicht bzw. die entsprechende MIP-Software ist in dem mobilen Endgerät MS nicht aktiviert.

Demgegenüber wird beim Client-MIP (CMIP) bzw. beim endgerätebasierten Mobilitätsmanagement Mobile-IP von dem jeweiligen Endgerät bzw. der Mobile Station MS unterstützt.

Beim Proxy-MIP erkennt das mobile Endgerät MS nur eine vom DHCP-Server zugewiesene IP-Adresse. Die Care-0f-Adresse des mobilen Endgerätes MS ist nicht dem mobilen Endgerät, sondern dem PMIP-Client, dem Fremdagenten FA sowie dem Heimagenten HA bekannt. Demgegenüber erkennt das mobile Endgerät-MS beim Client-MIP seine beiden IP-Adressen, d.h. sowohl die Home Addresse als auch die Care-Of-Adresse.

Wie in Figuren 4, 5 erkennbar, erfolgt nach der IP-Adressenzuweisung eine MIP-Registrierung. Bei der MIP-Registrierung wird der Heimagent HA über den aktuellen Standort des mobilen Endgerätes MS informiert. Zu seiner Registrierung sendet das mobile Endgerät MS bzw. der entsprechende PMIP-Client eine Registrierungsanforderung an einen Heimagenten HA , die die aktuelle Care-Of-Adresse enthält. Der Heimagent HA trägt die Care-Of-Adresse in eine von ihm verwaltete Liste ein und antwortet mit einer Registrierungsantwort (Registration Reply). Da prinzipiell jeder Rechner an einen Heimagenten HA eine Registrierungsanforderung schicken kann, könnte auf einfache Weise einem Heimagenten HA vorgespielt werden, ein Rechner bzw. ein mobiles Endgerät MS habe sich in ein anderes Netzwerk bewegt. Um dies zu verhindern, verfügt sowohl das mobile Endgerät MS als auch der Heimagent HA über einen gemeinsamen geheimen Schlüssel, nämlich einen so genannten Mobile IP Schlüssel (MIP-KEY).

Bei Proxy-MIP (PMIP) wird die Registrierungsanforderung (MIPRRQ) von einem PMIP-Client innerhalb des Zugangsnetzes ASN über einen Fremdagenten FA an den Heimagenten HA übertragen. Der Heimagent HA lässt sich von dem zugehörigen Authentisierungsserver H-AAA einen Schlüssel für den Teilnehmer zuweisen und überträgt diesen mit der MIP-Registrierungsantwort (MIP Registration Reply), wie in Figur 4 dargestellt ist.

Bei endgerätebasiertem Mobilitätsmanagement (CMIP) wird die Registrierungsanfragenachricht (MIPRRQ) direkt von dem mobilen Endgerät MS über den Fremdagenten FA an den Heimagenten HA gerichtet, wie in Figur 5 dargestellt.

Bei WiMax-Zugangsnetzen wird neben Mobile-IP (CMIP) auch Proxy-Mobile-IP (PMIP) eingesetzt, um ein Mobilitätsmanagement für Clients zu ermöglichen, die selbst über keine Mobile-IP-Client-Funktionalität verfügen. Bei PMIP wird im Zugangsnetz ein Proxy-Mobile-IP-Client vorgesehen, der die MIP-Signalisierung stellvertretend für den Client vornimmt. Diese Mobilitätsprotokolle werden in WiMax für eine Handover zwischen zwei Zugangsnetzen ASN bzw. zwischen zwei Netzwerk-Access-Provider NAP verwendet. Der zugehörige WiMax-Heimagent kann sich dabei wahlweise in einem WiMax-Heimnetz HCSN oder in einem besuchten WiMax-Netz (VCSN) befinden. Bei WiMax wird davon ausgegangen, dass sich in dem Heimnetz HCSN ein Heim-AAA-Server befindet, der die mit dem Benutzer geteilten langfristigen kryptographischen Schlüssel sowie weitere Benutzungsparameter kennt.

Bei der Registrierung fragt der WiMax-Heimagent bei dem WiMax-Heim-AAA-Server Sicherheitsparameter ab, beispielsweise temporäre kryptographische Schlüssel. Diese werden benötigt, damit sich nur ein berechtigter Client bei dem Heimagenten registrieren kann und um die MIP-Signalisierung zu schützen. Als Teil des Authentifikations- und Schlüsselvereinbarungsprotokolls, welches das mobile Endgerät mit dem Authentisierungsserver ausführt, kann sich auch das mobile Endgerät diese Sicherheitsparameter ableiten. Dabei wird bei einem WiMax-Zugangsnetz aus dem so genannte EMSK-Schlüssel (Extended Master Session Key) ein AMSK bzw. Mobile-IP-Root-Key (MIP-RK) abgeleitet und bereitgestellt. Aus diesem Mobile-IP-Root-Key werden anschließend weitere Schlüssel abgeleitet zum Schutz der unterschiedlichen Kommunikationsstrecken zwischen dem Mobile-Node bzw. dem Fremdagenten FA und dem Heimagenten HA. Die unterschiedlichen Mobile-IP-Varianten wie Mobile-IP V6 und Mobile-IP V4 werden dabei jeweils durch eigene Schlüssel für den Client-Mobile-IP-Fall und den Proxy-Mobile-IP-Fall abgeleitet.

Bei herkömmlichen WiMax-Zugangsnetzen wird ein Interworking bzw. eine Zusammenarbeit mit andersartigen Netzen nicht unterstützt.

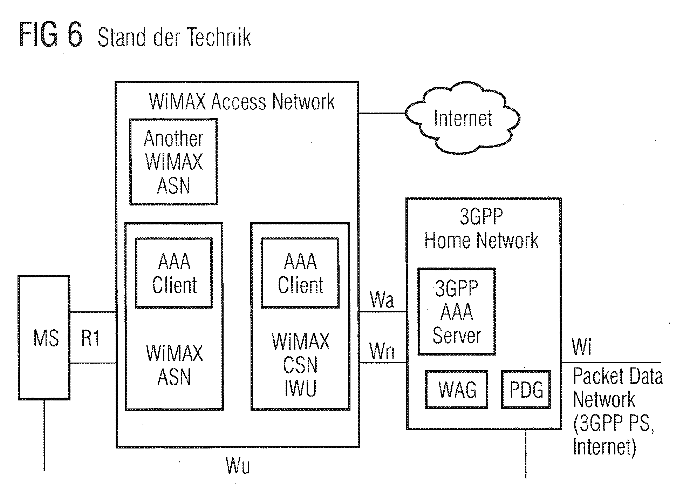

Figur 6 zeigt das Zusammenwirken zwischen einem WiMax-Zugangsnetz und einem 3GPP-Heimnetz nach dem Stand der Technik. Wie man aus Figur 6 erkennen kann, ist in dem WiMax-Zugangsnetz ein Authentisierungs-Proxy-Server vorgesehen (A-AA-Relay), der eine Interworking-Unit IWU als Schnittstelle zu dem 3GPP-Heimnetz aufweist. Der Authentisierungs-Proxy-Server übernimmt im Falle des Interworkings mit dem 3GPP-Netz die Schlüsselgenerierung und Schlüsselableitung, die im Rahmen der Netzanmeldung des Teilnehmers erforderlich ist, um für den Teilnehmer bzw. das mobile Endgerät Proxy-Mobile-IP zu aktivieren. Bei Proxy-Mobile-IP befindet sich ein Proxy-Mobile-IP-Client in dem ASN-Gateway bzw. Authentisierungs-Proxy-Server des WiMax-Heimnetzes WiMaX-CSN. Dieses WiMax-Heimnetz WiMax-CSN ist mit dem 3GPP-Netz verbunden, wie in Figur 6 zu erkennen. Bei Proxy-Mobile-IP ist es daher möglich, dass die Interworking-Unit IWU einen Mobile-IP-Schlüssel (MIP-Key) bei der Netzanmeldung zur Absicherung der Strecke zwischen dem Proxy-Mobile-IP-Client und dem Heimagenten generiert. Der Proxy-Mobile-IP-Client befindet sich dabei vorzugsweise in dem ASN-Gateway und bildet somit Teil der Zugangsnetzinfrastruktur. Es ist daher bei Proxy-Mobile-IP nicht notwendig, den 3GPP-Authentisierungsserver zu modifizieren bzw. der 3GPP-Authentisierungsserver muss nicht die Spezifikationen des WiMax-Zugangsnetzes erfüllen.

Bei Client-Proxy-Mobile-IP wird allerdings ein Interworking zwischen dem WiMax-Zugangsnetz und dem 3GPP-Heimnetz nicht unterstützt. Es bestehen derzeit keine geeigneten Protokolle, um Sicherheitsparameter an den Client bzw. das mobile Endgerät weiterzuleiten. Der Grund hierfür liegt darin, dass das mobile Endgerät diese Sicherheitsparameter bei der herkömmlichen Vorgehensweise aus dem Authentifikations- und Schlüsselvereinbarungs-Protokoll ableitet.

WO2004/049672, als nächstliegender Stand der Technik angesehen, offenbart ein Verfahren zum Bereitstellen eines Schlüssels für die Absicherung einer Datenübertragung zwischen einem mobilen Endgerät und einem Zugangsnetz, wobei das Endgerät und das Zugangsnetz die Schlüssel unabhängig von einander ableiten aus Daten eines Authentisierungsservers.

Es ist daher die Aufgabe der vorliegenden Erfindung, ein Verfahren und ein System zum Bereitstellen eines zugangsspezifischen Schlüssels für die Absicherung einer Datenübertragung zwischen einem mobilen Endgerät und einem Knoten eines Zugangsnetzes zu schaffen, die auch Client-IP (CMIP) ermöglichen, wenn der Authentisierungsserver des Heimnetzes ein Mobility-Management nicht unterstützt. Die Erfindung schafft ein Verfahren zum Bereitstellen eines zugangsnetzspezifischen Schlüssels für die Absicherung einer Datenübertragung zwischen einem mobilen Endgerät und einem Knoten eines Zugangsnetzes,
wobei bei einer Authentisierung des mobilen Endgerätes ein Authentisierungsserver einen Sitzungsschlüssel generiert, von dem ein Basisschlüssel abgeleitet und an einen Interworking-Proxy-Server übertragen wird, der aus dem übertragenen Basisschlüssel den zugangsnetzspezifischen Schlüssel ableitet und dem Knoten des Zugangsnetzes bereitstellt.

Bei einer bevorzugten Ausführungsform des erfindungsgemäßen Verfahrens wird der Sitzungsschlüssel durch einen MSK (Master Session Key) -Schlüssel oder durch einen EMSK (Extended Master Session Key)-Schlüssel gebildet.

Bei dem erfindungsgemäßen Verfahren wird somit ein lokaler Master Session Key (MSK bzw. EMSK), der aus Sicherheitsgründen den Authentisierungsserver (AAA) des Heimnetzes nicht verlassen darf, herangezogen, um einen Pseudo- bzw. Basisschlüssel davon abzuleiten, der anschließend an einen Interworking-Proxy-Server übertragen wird, wobei der Interworking-Proxy-Server aus dem empfangenen Basisschlüssel den notwendigen zugangsspezifischen Schlüssel entsprechend der vorgegebenen Schlüsselhierarchie ableitet und für die jeweiligen Knoten des Zugangsnetzes bereitstellt.

Bei einer Ausführungsform des erfindungsgemäßen Verfahrens befindet sich der Authentisierungsserver in einem Heimnetz des mobilen Endgerätes.

Bei einer Ausführungsform des erfindungsgemäßen Verfahrens wird der Basisschlüssel aus dem Sitzungsschlüssel mittels einer vorbestimmten ersten Ableitungsfunktion abgeleitet.

Diese erste Ableitungsfunktion wird vorzugsweise durch HMAC-SHA1-, HMAC-SHA256-, HMAC-MD5-, SHA1-, SHA-256- oder eine MD5-Ableitungsfunktion gebildet.

Bei einer bevorzugten Ausführungsform des erfindungsgemäßen Verfahrens erfolgt die Ableitung des Basisschlüssels in Abhängigkeit von dem Sitzungsschlüssel und einer Zeichenkette (string).

Bei einer.Ausführungsform des erfindungsgemäßen Verfahrens erfolgt die Authentisierung des mobilen Endgerätes bei dem Authentisierungsserver mittels eines EAP-Protokolls.

Bei einer weiteren Ausführungsform des erfindungsgemäßen Verfahrens erfolgt die Authentisierung des mobilen Endgerätes bei dem Authentisierungsserver mittels eines UMTS-AKA-Protokolls.

Bei einer alternativen Ausführungsform des erfindungsgemäßen Verfahrens erfolgt die Authentisierung des mobilen Endgeräts bei dem Authentisierungsserver mittels eines HTTP-Digest-AKA-Protokolls.

Bei einer weiteren Ausführungsform des erfindungsgemäßen Verfahrens erfolgt die Datenübertragung zwischen dem Authentisierungsserver und dem Interworking-Proxy-Server mittels eines Diameter- oder eines Radius-Protokolls.

Bei einer bevorzugten Ausführungsform des erfindungsgemäßen Verfahrens wird das Zugangsnetz durch ein WiMax-Netz gebildet.

Bei einer bevorzugten Ausführungsform des erfindungsgemäßen Verfahrens wird das Heimnetz durch ein 3GPP-Netz gebildet.

Bei einer bevorzugten Ausführungsform des erfindungsgemäßen Verfahrens wird aus dem übertragenen Basisschlüssel durch den Interworking-Proxy-Server mittels einer zweiten Ableitungsfunktion ein Mobile-IP-Root-Key abgeleitet.

Dabei wird die zweite Ableitungsfunktion vorzugsweise durch eine HMAC-SHA1, HMAC-SHA256-, HMAC-MD5-, SHA1-, SHA-256- oder eine MD5-Ableitungsfunktion gebildet.

Bei einer bevorzugten Ausführungsform des erfindungsgemäßen Verfahrens wird aus dem abgeleiteten Mobile-IP-Root-Key mittels einer dritten Ableitungsfunktion der zugangsspezifische Schlüssel für die Absicherung einer Datenübertragung zwischen dem mobilen Endgerät und dem Knoten eines Zugangsnetzes abgeleitet.

Bei dieser dritten Ableitungsfunktion handelt es sich vorzugsweise um eine HMAC-SHA1, HMAC-SHA256-, HMAC-MD5-, SHA1-, SHA-256- oder um eine MD5-Ableitungsfunktion.

Bei einer Ausführungsform des erfindungsgemäßen Verfahrens werden für die verschiedenen Datenübertragungsstrecken zwischen dem Knoten des Zugangsnetzes und dem mobilen Endgerät jeweils ein zugehöriger zugangsspezifischer Schlüssel abgeleitet.

Bei einer Ausführungsform des erfindungsgemäßen Verfahrens generiert das mobile Endgerät bei der Authentisierung ebenfalls den Sitzungsschlüssel und leitet davon den zugangsspezifischen Schlüssel ab.

Die Erfindung schafft ferner einen Authentisierungsserver zum Bereitstellen eines Basisschlüssels, aus dem ein zugangsspezifischer Schlüssel für die Absicherung einer Datenübertragungsstrecke zwischen einem mobilen Endgerät und einem Knoten eines Zugangsnetzes ableitbar ist, wobei der Authentisierungsserver bei einer Authentisierung des mobilen Endgerätes einen Sitzungsschlüssel generiert und davon mittels einer Ableitungsfunktion den Basisschlüssel ableitet und einem Interworking-Proxy-Server bereitstellt.

Die Erfindung schafft ferner einen Interworking-Proxy-Server zum Bereitstellen eines zugangsspezifischen Schlüssels für die Absicherung einer Datenübertragung zwischen einem mobilen Endgerät und einem Knoten eines Zugangsnetzes, wobei der Interworking-Proxy-Server aus einem von einem Authentisierungsserver übertragenen Basisschlüssel den zugangsnetzspezifischen Schlüssel ableitet und dem Knoten des Zugangsnetzes bereitstellt.

Die Erfindung schafft ferner ein Datenübertragungssystem mit mehreren Zugangsnetzen und mindestens einem Heimnetz des mobilen Endgerätes, wobei ein Authentisierungsserver des Heimnetzes bei einer Authentisierung eines mobilen Endgerätes einen Sitzungsschlüssel generiert und davon einen gemeinsamen Basisschlüssel ableitet, der an die Zugangsnetze übertragen wird, die jeweils einen Interworking-Proxy-Server aufweisen, der mindestens einen zugangsspezifischen Schlüssel aus dem übertragenen Basisschlüssel ableitet, der jeweils für die Absicherung einer Datenübertragungsstrecke zwischen dem mobilen Endgerät und einem Knoten des jeweiligen Zugangsnetzes vorgesehen ist.

Im Weiteren werden bevorzugte Ausführungsformen des erfindungsgemäßen Verfahrens und des erfindungsgemäßen Systems zum Bereitstellen des zugangsnetzspezifischen Schlüssels für die Absicherung einer Datenübertragung zwischen einem mobilen Endgerät und einem Knoten eines Zugangsnetzes unter Bezugnahme auf die beigefügten Figuren zur Erläuterung erfindungswesentlicher Merkmale beschrieben.

Es zeigen:

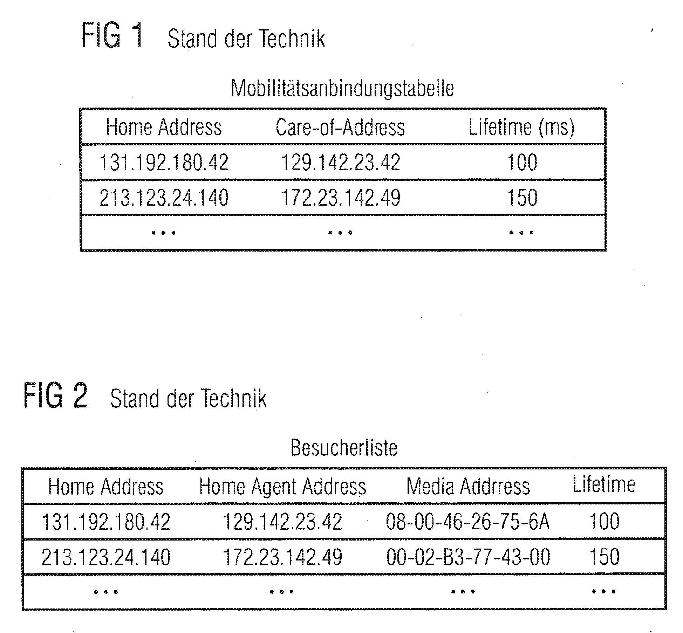

- Figur 1:: eine Mobilitätsanmeldungstabelle nach dem Stand der Technik;
- Figur 2:: eine Besucherliste nach dem Stand der Technik;
- Figur 3:: ein Referenzmodell für ein WiMax-Funknetzwerk;
- Figur 4:: einen Verbindungsaufbau bei Proxy-Mobile-IP (PMIP) nach dem Stand der Technik;
- Figur 5:: einen Verbindungsaufbau bei Client-MIP (CMIP) nach dem Stand der Technik;
- Figur 6:: ein Blockschaltbild zur Darstellung des Zusammenwirkens (Interworking) zwischen einem WiMax-Zugangsnetz und einem 3GPP-Netz nach dem Stand der Technik;

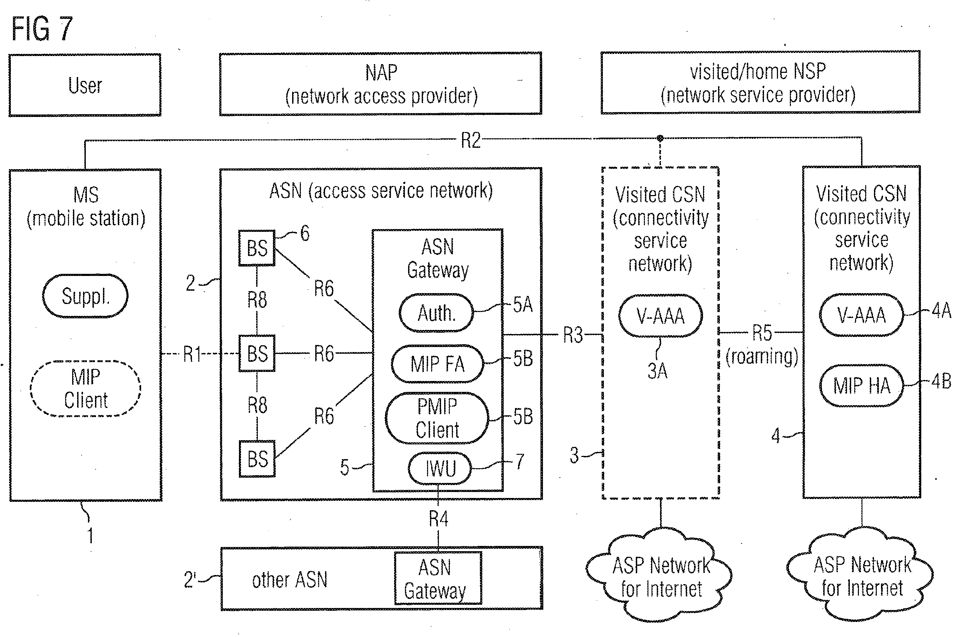

- Figur 7:: ein Blockschaltbild mit einer möglichen Ausführungsform des erfindungsgemäßen Systems zum Bereitstellen eines zugangsnetzspezifischen Schlüssels;

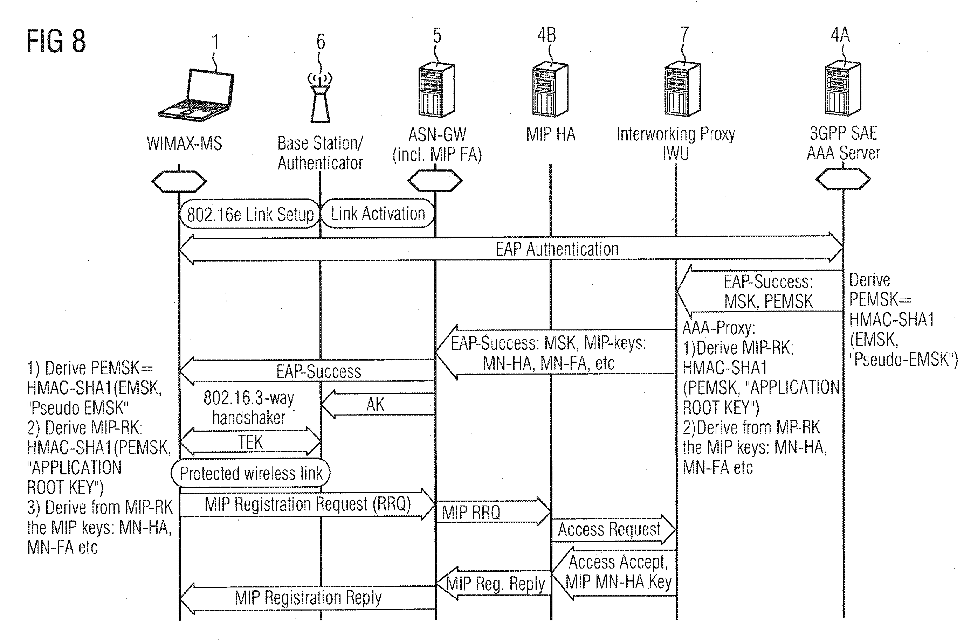

- Figur 8:: ein Signaldiagramm zur Darstellung einer möglichen Ausführungsform des erfindungsgemäßen Verfahrens zum Bereitstellen eines zugangsnetzspezifischen Schlüssels;

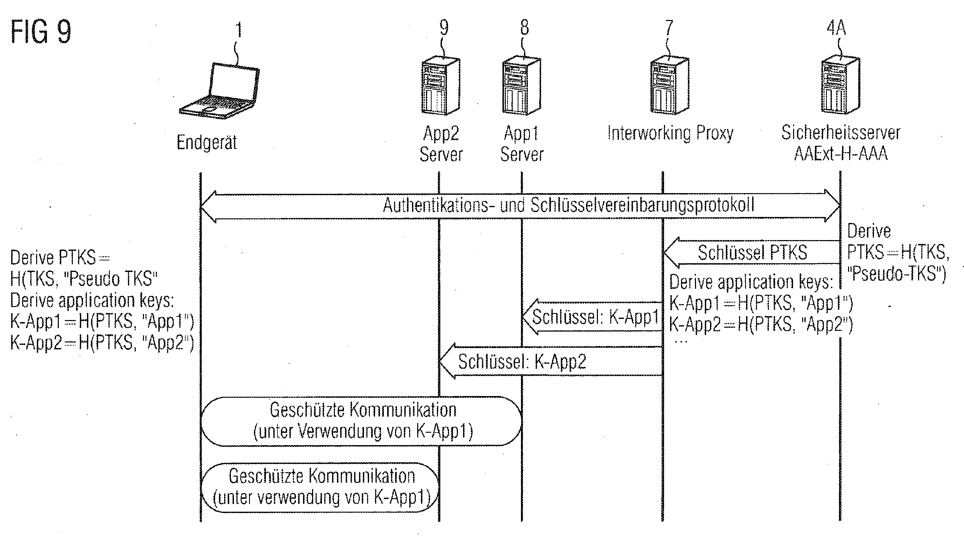

- Figur 9:: ein weiteres Signaldiagramm zur Darstellung einer möglichen Ausführungsform des erfindungsgemäßen Verfahrens zum Bereitstellen eines zugangsnetzspezifischen Schlüssels.

Figur 7 zeigt eine Netzarchitektur, bei der das erfindungsgemäße Verfahren zum Bereitstellen eines zugangsnetzspezifischen Schlüssels einsetzbar ist. Ein mobiles Endgerät 1 (MS = Mobile Station) ist über eine Schnittstelle R1 an ein Zugangsnetzwerk 2 (ASN = Access Service Network) angebunden. Das Zugangsnetzwerk 2 ist über eine Schnittstelle R3 an ein besuchtes Netz 3 (VCSN = Visited Connectivity Service Network) angeschlossen. Dieses besuchte Netzwerk 3 ist seinerseits über eine Schnittstelle R5 mit einem Heimnetz 4 (HCSN = Home Connectivity Service Network) verbunden.

Bewegt sich das mobile Endgerät 1 von einem ersten Zugangsnetz 2 zu einem zweiten Zugangsnetz 2' erfolgt eine Übergabe (Handover) zwischen dem ersten und zweiten Zugangsnetz. Diese Übergabe (Handover) wird in der WiMax-Spezifikation als "Macro Mobility Management" oder auch als "R3 Mobility" bzw. "Inter ASN Mobility" bezeichnet. Das besuchte Netz 3 und das Heimnetz 4 sind jeweils an ein Netzwerk eines Access Service Providers (ASP) oder an das Internet angeschlossen.

Jedes Zugangsnetz 2 enthält mehrere Basisstationen 6, die ihrerseits über eine Schnittstelle R6 an einen ASN-Gateway-Knoten 5 angebunden sind. Der in Figur 6 dargestellte ASN-Gateway-Knoten 5 umfasst einen Authentikator 5A, einen MIP-Fremdagenten 5B und optional einen PMIP-Client 5C sowie optional eine Interworking-Proxy-Unit 7. In jedem besuchten Netz 3 befindet sich ein AAA-Server 3A, wie in Figur 6 dargestellt. In dem Heimnetz 4 befindet sich ebenfalls ein Authentisierungsserver 4A sowie ein Heimagent 4B. Bei einer möglichen alternativen Ausführungsform befindet sich die Interworking-Unit 7 in dem Heimnetz 4.

Auf Seiten des mobilen Endgerätes 1 gilt es zwei Fälle zu unterscheiden. Das mobile Endgerät 1 unterstützt selbst Mobile IP und weist einen eigenen CMIP-Client auf oder das mobile Endgerät 1 unterstützt nicht Mobile IP und benötigt einen PMIP-Client 5C im Gateway-Knoten 5 des Zugangsnetzes 2.

Figur 8 zeigt ein Signaldiagramm zur Erläuterung einer möglichen Ausführungsform des erfindungsgemäßen Verfahrens, wobei sich die Interworking-Unit 7 bei einer ersten Ausführungsform in dem Zugangsnetz 2 oder bei einer alternativen Ausführungsform in dem Heimnetz 4 befindet. Bei dem erfindungsgemäßen Verfahren wird ein zugangsnetzspezifischer Schlüssel für die Absicherung einer Datenübertragung zwischen dem mobilen Endgerät 1 und einem beliebigen Knoten des Zugangsnetzes 2 bereitgestellt, wobei bei der Authentisierung des mobilen Endgerätes 1 der Authentisierungsserver 4A, der sich in dem Heimnetz 4 des mobilen Endgerätes 4 befindet, einen Sitzungsschlüssel generiert und von diesem Sitzungsschlüssel einen Basisschlüssel ableitet, welcher an den Interworking-Proxy-Server 7, wie er in Figur 7 dargestellt ist, übertragen wird. Der Interworking-Proxy-Server 7 leitet aus dem empfangenen Basisschlüssel den notwendigen zugangsspezifischen Schlüssel mittels einer Ableitungsfunktion ab und stellt sie für den jeweiligen Knoten des Zugangsnetzes 2 bereit. Der Sitzungsschlüssel, von dem der übertragene Basisschlüssel abgeleitet wird, ist bei einer Ausführungsform ein MSK (Master Session Key) oder ein EMSK (Extended Master Session Key) -Schlüssel. Wie in Figur 8 dargestellt, leitet der Authentisierungsserver 4A einen Pseudo-EMSK- bzw. einen gemeinsamen Basisschlüssel mittels einer HMAC-SHA1-Ableitungsfunktion aus dem Extended Master Session Key EMSK ab. Bei einer alternativen Ausführungsform wird diese Ableitungsfunktion durch eine HMAC-SHA256-, eine HMAC-MD5-, eine SHA1-, eine SHA-256- oder eine MD5-Ableitungsfunktion gebildet. Der abgeleitete Basisschlüssel bzw. Pseudoschlüssel wird in einer EAP-Success-Nachricht zusammen mit dem Master Session Key MSK an die Interworking-Unit 7, welche beispielsweise als Interworking-Proxy-Server ausgebildet ist, übertragen.

Bei einer möglichen Ausführungsform des erfindungsgemäßen Verfahrens erfolgt die Ableitung des Basisschlüssels bzw. des Pseudoschlüssels PEMSK in Abhängigkeit von dem Sitzungsschlüssel MSK und/oder EMSK und zusätzlich von einer Zeichenkette bzw. String, d.h. entsprechend einer der Varianten:
PEMSK = H(MSK, EMSK, "String"),
PEMSK = H(MSK, "String"),
PEMSK = H(EMSK, "String").

Bei der in Figur 8 dargestellten Ausführungsform erfolgt die Authentisierung des mobilen Endgerätes 1 mittels eines EAP-Datenübertragunsprotokolls. Bei einer alternativen Ausführungsform erfolgt die Authentisierung des mobilen Endgerätes bei einem Authentisierungsserver 4A mittels eines UMTS-AKA-Protokolls oder mittels eines HTTP-Digest-AKA-Protokolls. Die Datenübertragung zwischen dem Authentisierungsserver 4A und dem Interworking-Proxy-Server 7 erfolgt vorzugsweise mittels eines Diameter- oder Radius-Protokolls.

Der abgeleitete Basisschlüssel bzw. Pseudoschlüssel stellt eine Zwischenstufe in der Schlüsselhierarchie dar. Dieser Basisschlüssel kann als gemeinsamer Basisschlüssel auch an verschiedene Interworking-Proxy-Server 7, die in verschiedenen Zugangsnetzen 2 vorgesehen sind, übersendet werden. Bei den Zugangsnetzen 2 handelt es sich beispielsweise um WiMax-Netze. Bei dem Heimnetz 4, in dem sich der Authentisierungsserver 4A befindet, handelt es sich beispielsweise um ein 3GPP-Netz.

Sobald der Interworking-Proxy-Server 7, wie in Figur 8 zu sehen, den übertragenen Basisschlüssel PEMSK erhalten hat, bildet er mittels einer zweiten Ableitungsfunktion einen Mobile-IP-Root-Key IMP-RK. Bei der zweiten Ableitungsfunktion kann es sich ebenfalls um eine HMAC-SHA1-, eine HMAC-256-, eine HMAC-MD5-, eine SHA1-, eine SHA-256- oder eine MD5-Ableitungsfunktion gebildet. Bei weiteren Ausführungsformen können auch andere Ableitungsfunktionen bzw. kryptographische Key-Derivation-Functions KDF verwendet werden. Aus dem derart abgeleiteten Mobile-IP-Root-Key MIP-RK können entsprechend der Schlüsselhierarchie weitere zugangsnetzspezifische Schlüssel für die Absicherung einer Datenübertragung zwischen dem mobilen Endgerät 1 und einem Knoten des Zugangsnetzes 2 abgeleitet werden. Auch bei dieser dritten Ableitungsfunktion kann es sich beispielsweise um eine HMAC-SHA1-, eine HMAC-256-, eine HMAC-MD5-, eine SHA1-, eine SHA-256- oder um eine MD5-Ableitungsfunktion handeln.

Der Mobile-IP-Root-Key MIP-RK wird verwendet, um daraus Applikationsschlüssel bzw. zugangsnetzspezifische Schlüssel zu generieren, beispielsweise:
MN-HA-MIP4 = H (MIP-RK, "String" |HA-IP)
MN-HA-CMIP6 = H(MIP-RK, "String" |HA-IP)
MN-FA = H(MIP-RK, "String" |FA-IP) und
FA-H = H(MIP-RK, "String" |FA-IP|HA-IP |NONCE).

Das Zeichen "|" steht für die Konkatenation der Teilzeichenketten.

Dabei kann die Schlüsselableitung noch dahingehend modifiziert werden, dass für PMIPV4 und CMIPV4 separate Schlüssel abgeleitet werden, beispielsweise:
MN-HA-CMIP4 = H(MIP-RK, "CMIP4MNHA" |HA-IP)
MN-HA-PMIP4 = H(MIP-RK, "PMIP4MNHA" |HA-IP).

Für jede der verschiedenen Datenübertragungsstrecken zwischen Knoten des Zugangsnetzes 2 und dem mobilen Endgerät 1 ist in dieser Weise jeweils ein zugehöriger zugangsnetzspezifischer Schlüssel aus dem Mobile-IP-Root-Key ableitbar, der seinerseits aus dem übertragenen Basisschlüssel abgeleitet wird.

Bei dem erfindungsgemäßen Verfahren wird die bisherige Schlüsselableitung im Rahmen einer EAP-basierten Netzanmeldung eines Teilnehmers derart erweitert, dass der Interworking-Proxy-Server 7 dem Zugangsnetz CMIP-geeignete Schlüssel bereitstellt, die gegebenenfalls auch für PMIP verwendbar sind. Bei dem erfindungsgemäßen Verfahren wird der Basisschlüssel bzw. der Pseudoschlüssel aus dem MSK und/oder dem EMSK und/oder weiteren Input, beispielsweise einer Zeichenkette mittels einer geeigneten Schlüsselableitungsfunktion KDF durch den Authentisierungsserver abgeleitet.

Figur 9 zeigt ein Signaldiagramm zur Erläuterung des dem erfindungsgemäßen Verfahren zugrunde liegenden Prinzips. Bei der Authentisierung eines mobilen Endgeräts 1 mittels eines Authentifikations- und Schlüsselvereinbarungsprotokolls, beispielsweise EAP basierend auf Radius oder Diameter, generiert ein Sicherheitsserver bzw. ein Authentisierungsserver 4A in einem ersten Netz einen Basisschlüssel bzw. einen Pseudoschlüssel PTKS bzw. einen pseudotemporären kryptographischen Schlüssel auf der Basis des temporären kryptographischen Schlüssels TKS, beispielsweise eines Master Session Keys MSK bzw. EMSK. Der mit einer Ableitungsfunktion abgeleitete Pseudoschlüssel wird anschließend an einen Interworking-Proxy-Server 7, der sich beispielsweise in einem zweiten Netz befindet, übertragen, wobei seinerseits für jeden Applikationsserver bzw. Knoten 8, 9 aus einer weiteren Ableitungsfunktion ein zugangsnetzspezifischer Schlüssel abgeleitet wird. Jeder Applikationsserver 8, 9 erhält anschließend von dem Interworking-Proxy-Server 7 den für ihn abgeleiteten zugangsspezifischen Schlüssel. Mittels der übertragenen Schlüssel ist anschließend die Datenübertragungsstrecke zwischen dem Endgerät 1 und dem jeweiligen Applikationsserver 8, 9 kryptographisch geschützt.

Mit dem erfindungsgemäßen Verfahren ist es möglich, Authentisierungsserver, beispielsweise WLAN- oder 3GPP-Server für WiMax-Zugangsnetze einzusetzen, wobei die Authentisierungsserver die von dem WiMax-Zugangsnetz erwartete CMIP/PMIP-Funktionalität nicht bereitstellen müssen, sondern lediglich um die Funktionalität erweitert werden müssen, einen Basisschlüssel aus dem Sitzungsschlüssel abzuleiten. Das erfindungsgemäße Verfahren bietet zudem den Vorteil, dass bei einem WiMax-Zugangsnetz auch der CMIP-Fall unterstützt wird und somit jede Einschränkung bezüglich der Makromobilität vermieden wird. Bei dem erfindungsgemäßen Verfahren muss das WiMax-Netz mit Ausnahme des Vorsehens eines Interworking-Proxy-Servers 7 in dem WiMax-Netz keinen weiteren Veränderungen unterzogen werden bzw. modifiziert werden. Das mobile Endgerät 1, der Authentisierungsserver sowie der Interworking-Proxy-Server 7 wissen, welchen Basisschlüssel bzw. Pseudoschlüssel sie einsetzen. Hierdurch wird ermöglicht, unterschiedliche MIP-Keys (Bootstrapping-Varianten) innerhalb des WiMax-Netzes zu unterstützen. Bei dem erfindungsgemäßen Verfahren wird Schlüsselmaterial, das beispielsweise aus einem 3GPP-Netz stammt, in Schlüsselmaterial für das WiMax-Netz transformiert, wobei die WiMax-Netze den gebildeten Schlüssel einsetzen können, ohne dass eine Anpassung vorgenommen wird.

Bei einer Ausführungsform des erfindungsgemäßen Verfahrens wird die Authentisierungsfunktionalität gemäß der Erfindung außerhalb des WiMax-Netzes, beispielsweise in dem 3GPP-Netz, etabliert. Das erfindungsgemäße Verfahren ermöglicht, zukünftiges WiMax-3GPP-Interworking, ohne dass dadurch Einschränkungen im WiMax-Netz hingenommen werden müssen. Ein weiterer Vorteil des erfindungsgemäßen Verfahrens besteht darin, dass es sich leicht auf das Interworking zwischen verschiedenen Netzen sowie für die Bereitstellung von Schlüsseln für beliebige Anwendungen erweitern lässt. Bei dem erfindungsgemäßen Verfahren muss nur der Interworking-Proxy-Server 7 wissen, welche applikationsspezifische Schlüssel bereitgestellt werden müssen und wie diese abzuleiten sind. Es ist daher bei dem erfindungsgemäßen Verfahren nicht erforderlich, dass bereits der Heim-Authentisierungsserver für alle angebundenen unterschiedlichen Netze jeweils die benötigten Schlüssel erzeugen kann. Dementsprechend ist es bei dem erfindungsgemäßen Verfahren verhältnismäßig einfach, unterschiedliche Netze flexibel an das Heimnetz anzubinden.

Bei dem erfindungsgemäßen Verfahren generiert das mobile Endgerät 1 bei der Authentisierung ebenfalls den Sitzungsschlüssel und leitet in entsprechender Weise den zugangsnetzspezifischen Schlüssel ab.

## Patentansprüche

1. Verfahren zum Bereitstellen eines zugangsnetzspezifischen Schlüssels für die Absicherung einer Datenübertragung zwischen einem mobilen Endgerät (1) und einem Knoten eines Zugangsnetzes (2),
wobei bei einer Authentisierung des mobilen Endgerätes (1) ein Authentisierungsserver (4A) einen Sitzungsschlüssel generiert, von dem ein Basisschlüssel abgeleitet und an einen Interworking-Proxy-Server (7) übertragen wird, der aus dem übertragenen Basisschlüssel den zugangsnetzspezifischen Schlüssel ableitet und dem Knoten des Zugangsnetzes (2) bereitstellt, und
wobei das mobile Endgerät (1) bei der Authentisierung ebenfalls den Sitzungsschlüssel generiert und davon den zugangsnetzspezifischen Schlüssel ableitet.

2. Verfahren nach Anspruch 1,
wobei der Sitzungsschlüssel durch einen MSK (Master Session Key)-Schlüssel oder durch einen EMSK (Extended Master Session Key)-Schlüssel gebildet wird.

3. Verfahren nach Anspruch 1,
wobei der Basisschlüssel aus dem Sitzungsschlüssel mittels einer vorbestimmten ersten Ableitungsfunktion abgeleitet wird.

4. Verfahren nach Anspruch 3,
wobei die erste Ableitungsfunktion durch eine HMAC-SHA1-, HMAC-SHA256-, HMAC-MD5-, eine SHA1-, SHA-256- oder MD5-Ableitungsfunktion gebildet wird.

5. Verfahren nach Anspruch 1,
wobei die Ableitung des Basisschlüssels in Abhängigkeit von dem Sitzungsschlüssel und einer Zeichenkette (string) erfolgt.

6. Verfahren nach Anspruch 1,
wobei die Authentisierung des mobilen Endgerätes bei dem Authentisierungsserver mittels eines EAP-Protokolls erfolgt.

7. Verfahren nach Anspruch 1,
wobei die Authentisierung des mobilen Endgerätes bei dem Authentisierungsserver mittels eines UMTS-AKA-Protokolls erfolgt.

8. Verfahren nach Anspruch 1,
wobei die Authentisierung des mobilen Endgerätes bei dem Authentisierungsserver mittels eines HTTP-Digest-AKA-Protokolls erfolgt.

9. Verfahren nach Anspruch 1,
wobei die Datenübertragung zwischen dem Authentisierungsserver und dem Interworking-Proxy-Server mittels eines Diameter- oder Radius-Protokolls erfolgt.

10. Verfahren nach Anspruch 1,
wobei das Zugangsnetz durch ein WiMax-Netz gebildet wird.

11. Verfahren nach Anspruch 1,
wobei das Heimnetz des mobilen Endgerätes durch ein 3GPP-Netz gebildet wird.

12. Verfahren nach Anspruch 1,
wobei aus dem übertragenen Basisschlüssel durch den Interworking-Proxy-Server mittels einer zweiten Ableitungsfunktion ein Mobile-IP-Root-Key abgeleitet wird.

13. Verfahren nach Anspruch 12,
wobei die zweite Ableitungsfunktion durch eine HMAC-SHA1-, HMAC-SHA256-, HMAC-MD5-, eine SHA1-, SHA-256- oder MD5-Ableitungsfunktion gebildet wird.

14. Verfahren nach Anspruch 13,
wobei aus dem abgeleiteten Mobile-IP-Root-Key mittels einer dritten Ableitungsfunktion der zugangsnetzspezifische Schlüssel für die Absicherung einer Datenübertragung zwischen dem mobilen Endgerät und dem Knoten eines Zugangsnetzes abgeleitet wird.

15. Verfahren nach Anspruch 14,
wobei die dritte Ableitungsfunktion durch eine HMAC-SHA1-, HMAC-SHA256-, HMAC-MD5-, SHA1-, SHA-256- oder eine MD5-Ableitungsfunktion gebildet wird.

16. Verfahren nach Anspruch 1,
wobei für die verschiedenen Datenübertragungsstrecken zwischen Knoten des Zugangsnetzes (2) und dem mobilen Endgerät (1) jeweils ein zugehöriger zugangsnetzspezifischer Schlüssel abgeleitet wird.

17. Authentisierungsserver (4A) zum Bereitstellen eines Basisschlüssels, aus dem ein zugangsnetzspezifischer Schlüssel für die Absicherung einer Datenübertragungsstrecke zwischen einem mobilen Endgerät (1) und einem Knoten eines Zugangsnetzes (2) ableitbar ist, wobei der Authentisierungsserver (4A) dazu ausgebildet ist , bei einer Authentisierung des mobilen Endgerätes (1) einen Sitzungsschlüssel zugenerieren und davon mittels einer Ableitungsfunktion den Basisschlüssel abzuleiten und einem Interworking-Proxy-Server (7) bereitzustellen.

18. Authentisierungsserver nach Anspruch 17, wobei die Ableitungsfunktion durch eine HMAC-SHA1-, HMAC-SHA256-, HMAC-MD5-, SHA1-, SHA-256- oder eine MD5-Ableitungsfunktion gebildet wird.

19. Interworking-Proxy-Server (7) zum Bereitstellen eines zugangsnetzspezifischen Schlüssels für die Absicherung einer Datenübertragung zwischen einem mobilen Endgerät (1) und einem Knoten eines Zugangsnetzes (2), aus einem von einem Authentisierungsserver (4A) übertragenen Basisschlüssel den zugangsnetzspezifischen Schlüssel abzuleiten und dem Knoten des Zugangsnetzes (2) bereitzustellen.

20. Datenübertragungssystem mit mehreren Zugangsnetzen (2) und mindestens einem Heimnetz (4) eines mobilen Endgerätes (1),
wobei ein Authentisierungsserver (4A) des Heimnetzes (4) dazu ausgebildet ist bei einer Authentisierung eines mobilen Endgerätes (1) einen Sitzungsschlüssel zu generieren dazu ausgebildet ist und davon einen gemeinsamen Basisschlüssel abzuleiten und an die Zugangsnetze (2) zu übertragen, die jeweils einen Interworking-Proxy-Server (7) aufweisen, der dazu ausgebildet ist mindestens einen zugangsnetzspezifischen Schlüssel aus dem übertragenen Basisschlüssel abzuleiten, der jeweils für die Absicherung einer Datenübertragungsstrecke zwischen dem mobilen Endgerät (1) und einem Knoten des jeweiligen Zugangsnetzes (2) vorgesehen ist, und
wobei das mobile Endgerät (1) dazu ausgebildet ist bei der Authentisierung ebenfalls den Sitzungsschlüssel zu generieren und davon den zugangsnetzspezifischen Schlüssel abzuleiten.

21. Datenübertragungssystem nach Anspruch 20, wobei für jeden Knoten des Zugangsnetzes (2) ein zugehöriger zugangsnetzspezifischer Schlüssel durch den Interworking-Proxy-Server (7) aus dem übertragenen Basisschlüssel abgeleitet wird.

## Claims

1. Method for providing an access-network-specific key for securing a data transfer between a mobile terminal (1) and a node of an access network (2),
wherein during authentication of the mobile terminal (1), an authentication server (4A) generates a session key from which a base key is derived and transferred to an interworking proxy server (7) which from the transferred base key derives the access-network-specific key and provides it to the node of the access network (2), and wherein, during authentication, the mobile terminal (1) also generates the session key and derives therefrom the access-network-specific key.

2. Method according to claim 1,
wherein the session key is formed by an MSK (master session key) or an EMSK (extended master session key).

3. Method according to claim 1,
wherein the base key is derived from the session key by means of a predefined first derivation function.

4. Method according to claim 3,
wherein the first derivation function is formed by an HMAC-SHA1, HMAC-SHA256, HMAC-MD5, SHA1, SHA-256 or MD5 derivation function.

5. Method according to claim 1,
wherein derivation of the base key is effected as a function of the session key and a character string (string).

6. Method according to claim 1,
wherein authentication of the mobile terminal in the authentication server is effected by means of an EAP protocol.

7. Method according to claim 1,
wherein authentication of the mobile terminal in the authentication server is effected by means of a UMTS-AKA protocol.

8. Method according to claim 1,
wherein authentication of the mobile terminal in the authentication server is effected by means of an HTTP-Digest-AKA protocol.

9. Method according to claim 1,
wherein the data transfer between the authentication server and the interworking proxy server is effected by means of a Diameter or Radius protocol.

10. Method according to claim 1,
wherein the access network is formed by a WiMax network.

11. Method according to claim 1,
wherein the home network of the mobile terminal is formed by a 3GPP network.

12. Method according to claim 1,
wherein a Mobile IP root key is derived from the transferred base key by the interworking proxy server by means of a second derivation function.

13. Method according to claim 12,
wherein the second derivation function is formed by an HMAC-SHA1, HMAC-SHA256, HMAC-MD5, SHA1, SHA-256 or MD5 derivation function.

14. Method according to claim 13,
wherein the access-network-specific key for securing a data transfer between the mobile terminal and the node of an access network is derived from the derived Mobile IP root key by means of a third derivation function.

15. Method according to claim 14,
wherein the third derivation function is formed by an HMAC-SHA1, HMAC-SHA256, HMAC-MD5, SHA1, SHA-256 or an MD5 derivation function.

16. Method according to claim 1,
wherein an appropriate access-network-specific key is derived for each of the various data transfer pathways between nodes of the access network (2) and the mobile terminal (1).

17. Authentication server (4A) for providing a base key from which an access-network-specific key for securing a data transfer route between a mobile terminal (1) and a node of an access network (2) can be derived,
wherein, during authentication of the mobile terminal (1), the authentication server (4A) is configured to generate a session key and to derive the base key therefrom by means of a derivation function and to provide it to an interworking proxy server (7).

18. Authentication server according to claim 17,
wherein the derivation function is formed by an HMAC-SHA1, HMAC-SHA256, HMAC-MD5, SHA1, SHA-256 or an MD5 derivation function.

19. Interworking proxy server (7) for providing an access-network-specific key for securing a data transfer between a mobile terminal (1) and a node of an access network (2), configured to derive the access-network-specific key from a base key transferred by an authentication server (4A) and to provide it to the node of the access network (2).

20. Data transfer system comprising a plurality of access networks (2) and at least one home network (4) of a mobile terminal (1),
wherein, during authentication of a mobile terminal (1), an authentication server (4A) of the home network (4) is configured to generate a session key and to derive a shared base key therefrom and to transfer it to the access networks (2) which each have an interworking proxy server (7) which is configured to derive from the transferred base key at least one access-network-specific key which is respectively provided for securing a data transfer pathway between the mobile terminal (1) and a node of the respective access network (2), and
wherein, during authentication, the mobile terminal (1) is also configured to generate the session key and to derive therefrom the access-network-specific key.

21. Data transfer system according to claim 20 wherein, for each node of the access network (2), an appropriate access-network-specific key is derived from the transferred base key by the interworking proxy server (7).

## Revendications

1. Procédé pour la mise à disposition d'une clé de réseau d'accès spécifique pour la sécurisation d'une transmission de données entre un terminal mobile (1) et un noeud d'un réseau d'accès (2), dans lequel, lors d'une authentification du terminal mobile (1), un serveur d'authentification (4A) génère une clé de session, de laquelle une clé de base est dérivée et transmise à un serveur proxy d'interfonctionnement (7), qui dérive la clé de réseau d'accès spécifique à partir de la clé de base transmise et la met à la disposition du noeud du réseau d'accès (2), et dans lequel le terminal mobile (1) génère également la clé de session lors de l'authentification et en dérive la clé de réseau d'accès spécifique.

2. Procédé selon la revendication 1, dans lequel la clé de session est formée par une clé MSK (Master Session Key) ou par une clé EMSK (Extended Master Session Key).

3. Procédé selon la revendication 1, dans lequel on dérive la clé de base à partir de la clé de session au moyen d'une première fonction de dérivation prédéterminée.

4. Procédé selon la revendication 3, dans lequel la première fonction de dérivation est formée par une fonction de dérivation HMAC-SHA1, HMAC-SHA256, HMAC-MD5, SHA1, SHA-256 ou MD5.

5. Procédé selon la revendication 1, dans lequel la dérivation de la clé de base est effectuée en fonction de la clé de session et d'une chaîne de signes (string).

6. Procédé selon la revendication 1, dans lequel l'authentification du terminal mobile auprès du serveur d'authentification est effectuée au moyen d'un protocole EAP.

7. Procédé selon la revendication 1, dans lequel l'authentification du terminal mobile auprès du serveur d'authentification est effectuée au moyen d'un protocole UMTS-AKA.

8. Procédé selon la revendication 1, dans lequel l'authentification du terminal mobile auprès du serveur d'authentification est effectuée au moyen d'un protocole HTTP-Digest-AKA.

9. Procédé selon la revendication 1, dans lequel la transmission de données entre le serveur d'authentification et le serveur proxy d'interfonctionnement est effectuée au moyen d'un protocole Diameter ou Radius.

10. Procédé selon la revendication 1, dans lequel le réseau d'accès est formé par un réseau WiMax.

11. Procédé selon la revendication 1, dans lequel le réseau domestique du terminal mobile est formé par un réseau 3GPP.

12. Procédé selon la revendication 1, dans lequel une clé Mobile-IP-Root est dérivée de la clé de base transmise par le serveur proxy d'interfonctionnement au moyen d'une deuxième fonction de dérivation.

13. Procédé selon la revendication 12, dans lequel la deuxième fonction de dérivation est formée par une fonction de dérivation HMAC-SHA1, HMAC-SHA256, HMAC-MD5, SHA1, SHA-256 ou MD5.

14. Procédé selon la revendication 13, dans lequel la clé de réseau d'accès spécifique, pour la sécurisation d'une transmission de données entre le terminal mobile et le noeud d'un réseau d'accès, est dérivée de la clé dérivée Mobile-IP-Root au moyen d'une troisième fonction de dérivation.

15. Procédé selon la revendication 14, dans lequel la troisième fonction de dérivation est formée par une fonction de dérivation HMAC-SHA1, HMAC-SHA256, HMAC-MD5, SHA1, SHA-256 ou MD5.

16. Procédé selon la revendication 1, dans lequel on dérive respectivement une clé de réseau d'accès spécifique correspondante pour les différentes sections de transmission de données entre des noeuds du réseau d'accès (2) et le terminal mobile (1).

17. Serveur d'authentification (4A) pour la mise à disposition d'une clé de base, à partir de laquelle une clé de réseau d'accès spécifique pour la sécurisation d'une section de transmission de données entre un terminal mobile (1) et un noeud d'un réseau d'accès (2) peut être dérivée, dans lequel le serveur d'authentification (4A) est configuré pour générer une clé de session lors d'une authentification du terminal mobile (1) et en dériver la clé de base au moyen d'une fonction de dérivation et la mettre à disposition d'un serveur proxy d'interfonctionnement (7).

18. Serveur d'authentification selon la revendication 17, dans lequel la fonction de dérivation est formée par une fonction de dérivation HMAC-SHA1, HMAC-SHA256, HMAC-MD5, SHA1, SHA-256, ou MD5.

19. Serveur proxy d'interfonctionnement (7) pour la mise à disposition d'une clé de réseau d'accès spécifique pour la sécurisation d'une transmission de données entre un terminal mobile (1) et un noeud d'un réseau d'accès (2), configuré pour dériver la clé de réseau d'accès spécifique à partir d'une clé de base transmise par un serveur d'authentification (4A) et la mettre à la disposition du noeud du réseau d'accès (2).

20. Système de transmission de données avec plusieurs réseaux d'accès (2) et au moins un réseau domestique (4) d'un terminal mobile (1), dans lequel un serveur d'authentification (4A) du réseau domestique (4) est configuré pour générer une clé de session lors d'une authentification d'un terminal mobile (1) et en dériver une clé de base commune et la transmettre aux réseaux d'accès (2), qui présentent respectivement un serveur proxy d'interfonctionnement (7), qui est configuré pour dériver au moins une clé de réseau d'accès spécifique à partir de la clé de base transmise, qui est prévue respectivement pour la sécurisation d'une section de transmission de données entre le terminal mobile (1) et un noeud du réseau d'accès respectif (2), et dans lequel le terminal mobile (1) est configuré pour générer également la clé de session lors de l'authentification et pour en dériver la clé de réseau d'accès spécifique.

21. Système de transmission de données selon la revendication 20, dans lequel une clé de réseau d'accès spécifique correspondante est dérivée de la clé de base transmise au moyen du serveur proxy d'interfonctionnement (7) pour chaque noeud du réseau d'accès (2).
